# EUROPÄISCHE PATENTANMELDUNG

(11) **EP 2 314 791 A2**
(43) Veröffentlichungstag der Anmeldung: **27.04.2011**
(21) Anmeldenummer: 10013536.7
(22) Anmeldetag: 12.10.2010
(51) Int. Cl.: E04C 3/07, E04C 3/29

(54) **Leichbauträger**

(30) Priorität: 20.10.2009 DE 102009049855
(71) Anmelder: Adensis GmbH, 01129 Dresden (DE)
(72) Erfinder: Beck, Bernhard, 97332 Volkach OT Dimbach (DE)

(57) **Zusammenfassung**

Es wird ein Leichtbauträger mit einem gewellten Grundkörper (1,1') für Photovoltaikanlagen beschrieben, der eine erste Schicht (3) aus Metall aufweist, auf welche eine zweite Schicht (5) aus Hartschaum aufgebracht ist, auf welche wiederum eine weitere Schicht (7) aus Metall aufgebracht ist. Der Grundkörper (1,1') weist die Form eines langgestreckten Rechtecks auf, auf oder an dessen längsseitigen Rändern jeweils eine Stabilisierungsschiene (9,11; 17,17',17") verläuft. Die Schienen (17) sind als U-Profil ausgelegt und mit einer Vergussmasse (21,23) versehen, in welche die Stirnseite (13) der Grundkörper eingebettet ist.

## Beschreibung

Die Erfindung bezieht sich auf einen Leichtbauträger, insbesondere für den Einsatz als Trägerbalken für Modulschienen im Photovoltaik-Anlagenbau mit einem gewellten Grundkörper, der eine erste Schicht aus Metall aufweist, auf welche eine zweite Schicht aus Hartschaum aufgebracht ist, auf welche wiederum eine weitere Schicht aus Metall aufgebracht ist.

Solche Grundkörper sind per se bekannt und dienen als Dach oder Wand bei Gebäuden, da sie durch die Hartschaumschicht, z.B. aus Polyurethan, eine gute thermische Isolierung bereitstellen und zugleich eine zufrieden stellende mechanische Festigkeit aufweisen, um auch größere Platten von mehreren Quadratmetern installieren zu können. Als Träger haben diese Platten bisher keine Anwendung erfahren, da sie den Zug- und Druckkräften, die bei ihrer Funktion als Träger auftreten, nicht standhalten können. Die Wellung würde gestaucht werden, womit der Träger seine Festigkeit verliert.

Insbesondere bei Photovoltaikgroßanlagen kommen zur Zeit als Träger Holzbalken zum Einsatz, die zum einen relativ schwer und damit unhandlich zu montieren und zum anderen teuer sind. Die Erfindung geht aus von der Überlegung, dass die bekannte Platte von geringem spezifischem Gewicht so durch Anbauteile modifiziert werden müsste, dass sie als Basiskomponente für einen Träger dienen kann. Entsprechend liegt vorliegender Erfindung die Aufgabe zugrunde, die bekannte Plattenstruktur in einen Leichtbauträger zu integrieren.

Diese Aufgabe wird erfindungsgemäß dadurch gelöst, dass der Grundkörper die Form eines langgestreckten Rechtecks aufweist, auf oder an dessen oberem und unterem längsseitigen Rand jeweils eine Stabilisierungsschiene verläuft oder dass die Stabilisierungsschienen formschlüssig in die obere, beziehungsweise in die untere längsseitige Stirnfläche der Grundkörpers eingearbeitet sind.

Da die Stauchung unter Last durch einen Verlust der Wellenstruktur entsteht, wird durch die Stabilisierungsschiene eben diese Wellenstruktur gestärkt und ein Einknicken oder eine Stauchung tritt erst bei erheblich höheren Kräften auf als wenn keine Stabilisierungsschiene vorhanden ist.

Im einfachsten Fall ist die Stabilisierungsschiene ein Flachprofil aus Metall oder Kunststoff, welches jeweils am unteren und oberen längsseitigen Rand des Grundkörpers auf zumindest einer Seite seitlich befestigt ist. Das Flachprofil kann auch direkt auf die freie Stirnseite des Grundkörpers aufgebracht und dort z.B. punktverschweißt werden. Als Flachprofil wird dabei auch der Schenkel eines Winkelprofils verstanden. Etwas aufwendiger ist die Alternative, die Stabilisierungsschiene als ein U-Profil aus Metall oder Kunststoff auszubilden, dessen beiden Schenkel beidseitig den jeweiligen längsseitigen Rand umgreifen oder, im Falle der Alternative, in eine Aussparung in der stirnseitigen Fläche formschlüssig eingebettet sind. Als Metall kommen dabei insbesondere Leichtmetalle wie z.B. Aluminium infrage und als Kunststoff solche mit hoher Festigkeit, die eventuell zusätzlich noch mit Karbon versehen sind oder sogar ganz daraus bestehen. Die Befestigung erfolgt zweckmäßiger Weise so, dass das Flachprofil bzw. die Schenkel des U-Profils an den Scheitelpunkten mehrerer Wellen des Grundkörpers vernietet sind. Dabei ist klar, dass der Scheitelpunkt der Welle auf einer Seite des Grundkörpers bei der gegenüberliegenden Seite das Wellental ist, wenn man die Blickrichtung beibehält. Bei Blick auf die jeweilige Seite ist es dann immer der sich dem Betrachter bietende Scheitelpunkt am Wellenberg, an dem das Befestigungsmittel, wie z.B. die Niete, die Verbindung zwischen dem Grundkörper und dem Stabilisierungsmittel herstellt.

Eine weitere Erhöhung der Stabilität wird erzielt, wenn der Boden nur eines der oberen und ggf. unteren U-Profile mit einer aushärtenden Masse ausgegossen wird. Die Masse besteht beispielsweise aus Kunstharz, Beton oder Beton mit beigemischtem Granitpulver, kann aber auch jedwede geeignete Substanz sein, die vor dem Aushärten fließfähig ist. Sie sollte im Rahmen der vertretbaren Kosten leicht sein, wie z.B. ein Körper aus in Gießharz getränktem Karbonpulver. Die Masse kann gegebenenfalls mit aufgeschäumten Kugeln, wie Styroporkugeln, versetzt sein, die ihr Gewicht weiter reduzieren, ohne an Festigkeit einzubüßen.

Als Grundkörper eignet sich jeder in breitem Sinne ausgelegter wellenförmiger Körper wie z.B. ein Trapezfeldträger, der trapezförmig gewellt ist, ein Zickzack-Profil welches eine dreiecksförmige Wellung aufweist oder ein Kastenprofil, bei dem die Wellung rechteckförmig ist. Bei allen Ausführungen gilt, dass die erste Schicht und die weitere Schicht handelsübliche Strukturplatten, wie z.B. ein Trapezblech sind, zwischen denen die zweite Schicht verklebt ist. Für die Strukturplatten (z.B. Trapezblech) gilt, dass eine Stärke oder Dicke für die erste und die weitere Schicht zwischen 0,2 mm und 2 mm, insbesondere zwischen 0,5 mm und 1 mm sinnvoll ist. Bei Einsatz der Träger zu anderen als dem vorgesehenen Zweck bei Photovoltaikanlage können auch dickere und schwerere Schichten Verwendung finden.

Eine Variante des zuvor beschriebenen Leichtbauträgers sieht vor, dass zwei parallel verlaufende Grundkörper nebeneinander angeordnet sind, deren sich gegenüberliegende innere obere und/oder untere Randflächen mit jeweils der Außenseite eines der Schenkel eines zwischen den Grundkörpern angeordneten U-Profils aus Metall oder Kunststoff verbunden sind. Eine etwas kompliziertere Form sieht eine breitere U-Profilleiste vor, an dessen Innenseite des linken Schenkels der erste Grundkörper und an dessen Innenseite des rechten Schenkels der zweite Grundkörper befestigt sind. Auch hier sind die zuvor in Zusammenhang mit Ein-Grundkörper-Lösung beschriebenen Befestigungsmöglichkeiten zwischen Grundkörper und Stabilisierungsmittel anwendbar. Bei großen zu überbrückenden Spannweiten kann auch eine Vielzahl (z.B. zwischen 4 und acht) von Grundkörpern parallel zueinander verlaufen und durch eine gemeinsame Stabilisierungsschiene, die dann auch ein breiterer Streifen von z.B. 1 Meter Breite sein kann, verbunden werden. Dabei ist die gemeinsame Stabilisierungsschiene an zumindest den mittleren Grundkörpern nur über die Stirnfläche mit den Grundkörpern verbunden.

Um Spannungsspitzen an den Krafteinleitungsstellen, d.h. an den Rändern des Grundkörpers abzumildern, ist es vorgesehen, auf der ausgehärteten Masse eine dauerelastische Masse, wie z.B. Bitumen aufzubringen, in welche der oder beide längsseitigen Ränder des oder der Grundkörper teilweise eingebettet sind. Die dauerelastische Masse kann auf die ausgehärtete Masse aufgesprüht sein oder es kann ein Gummi- oder Kautschukband in das U-Profil eingelegt werden. Bei der Flachband bzw. Flacheisenlösung ist eine Seite des Bandes zuvor mit der elastischen Masse zu kaschieren. Die Dicke der dauerelastischen Masse sollte zwischen 5 mm bis 12 mm liegen und die Eindringtiefe des Randes in die elastische Masse zwischen 2 mm und 7 mm. Es ist auch der umgekehrte Aufbau möglich, bei dem dann die dauerelastische Masse direkt auf den Boden des U-Profils aufgetragen ist und die längsseitige Stirnfläche dort mündet. Eine zusätzliche, aushärtende Schicht ist dann auf die dauerelastische Schicht gegossen.

Weitere Vorteile und Ausgestaltungen der Erfindung ergeben sich aus der Beschreibung der Ausführungsbeispiele anhand der Figuren. Es zeigen:

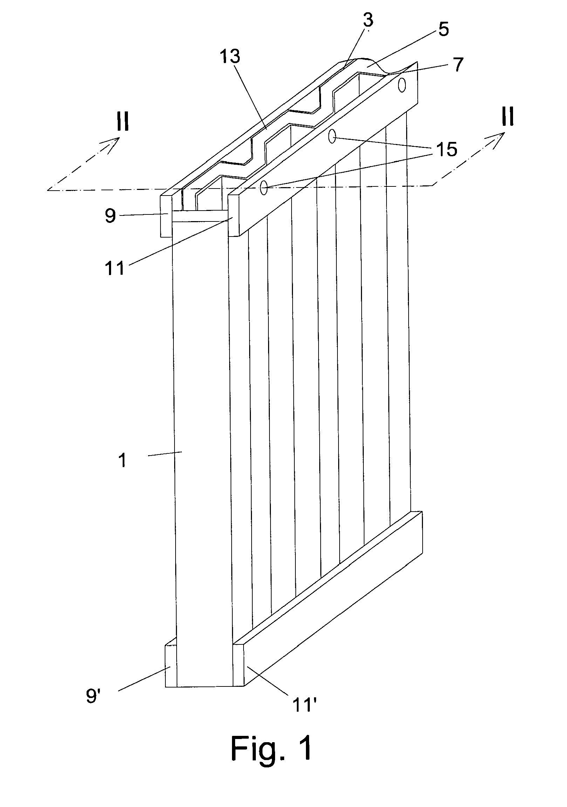

- Fig. 1: eine perspektivische Schrägaufsicht auf einen Leichtbauträger nach der Erfindung;
- Fig. 2: einen Schnitt entlang der Linie II-II der Fig. 1;
- Fig. 3: einen Schnitt entlang der Linie III-III der Figur 2;
- Fig. 4: einen Schnitt entlang der Linie IV-IV der Figur 2
- Fig. 5: eine Aufsicht auf den Träger nach Figur 1 mit einem U-Profil anstelle von zwei Flachbandeisen;
- Fig. 6: einen Schnitt entlang der Linie VI-VI der Figur 5;
- Fig. 7: einen Schnitt entlang der Linie VII-VII der Figur 5;
- Fig. 8: einen Schnitt entsprechend der Figur 6 mit Vergussmasse im U- Profilgrund;
- Fig. 9: einen Leichtbauträger mit zwei Grundelementen und außen liegendem U-Profil;
- Fig.10: einen Leichtbauträger mit zwei Grundelementen und innen liegendem U-Profil;
- Fig.11, 11a: eine erste Ausführungsform eines Leichtbauträgers mit formschlüssig in die längsseitige Stirnfläche des Grundkörpers integriertem Rundeisen als Stabilisierungsschiene;
- Fig.12: eine zweite Ausführungsform eines Leichtbauträgers mit formschlüssig in die längsseitige Stirnflächen des Grundkörpers integrierter Stabilisierungsschiene;
- Fig.13: eine Ausführungsform eines Leichtbauträgers mit vielen Grundkörpern und eine gemeinsame, auf ihrer Unterseite formschlüssig in die längsseitigen Stirnflächen der Grundkörper integrierte Stabilisierungsschiene;
- Fig.14: eine Ausführungsform eines Leichtbauträgers mit vielen Grundkörpern und eine gemeinsame, formschlüssig an den Stirnflächen der Grundkörper verbundene Stabilisierungsschiene;
- Fig.15: eine Ausführungsform eines Leichtbauträgers mit vielen Grundkörpern und mit einer gemeinsamen, an den oberen Rändern der Grundkörper vernieteten Stabilisierungsschiene;
- Fig.16: eine perspektivische Ansicht einer weiteren Ausführungsform mit einer Einschnürung; und
- Fig. 17: eine Profilansicht zur Ausführungsform nach der Figur 16.

In den Figuren ist mit 1 ein Grundkörper bezeichnet, der sich aus einer ersten Metallschicht 3, einer Hartschaumschicht 5 und einer weiteren Metallschicht 7 zusammensetzt. Der Grundkörper 1 ist aus einer an sich bekannten Platte zu einem Streifen geschnitten, dessen Länge ein Vielfaches, z.B. das 5- bis 100-fache, insbesondere das 10- bis 50-fache, seiner Breite beträgt. Bei einer Breite zwischen 10 cm und 40 cm kann der Streifen entsprechend mehrere Meter lang sein. Am seitlichen Rand seines oberen Endes ist der Grundkörper mit einem ersten und einem zweiten Stabilisierungsmittel in Form eines ersten und zweiten Flachbandes 9,11, was insbesondere ein Flacheisen sein kann, versehen. Analog befinden sich Flachbänder 9',11' seitlich in der Nähe des unteren Randes des Grundkörpers 1. Anstelle von zwei Flachbändern 9,11 ist auch ein einziges Flachband 9 ausreichend, insbesondere, wenn es unmittelbar auf die Stirnfläche 13 des Grundkörpers aufgebracht und dort befestigt ist. In der gezeigten Variante sind die Flachbänder 9,11 mittels Nieten 15 mit dem Grundkörper 1 verbunden. Die Nieten 15 sind in der Nähe des Scheitelpunkts des wellenförmigen Grundträgers 1 vorgesehen, d.h. im gezeigten Beispiel eines Trapezbleches an den außen liegenden schmalen Flächen des Trapezgrundes. Bei einer Druck- und Biegebelastung verteilen die Flachbänder 9,11 die Kräfte gleichmäßig über die Länge des Streifens und verhindern insbesondere eine Durchbiegung oder Stauchung des Grundkörpers 1.

In den Schnittfiguren 2 bis 4 ist obige Konstruktion noch mal aus anderer Sicht gezeigt, wobei die gleichen Bezugszeichen verwendet wurden.

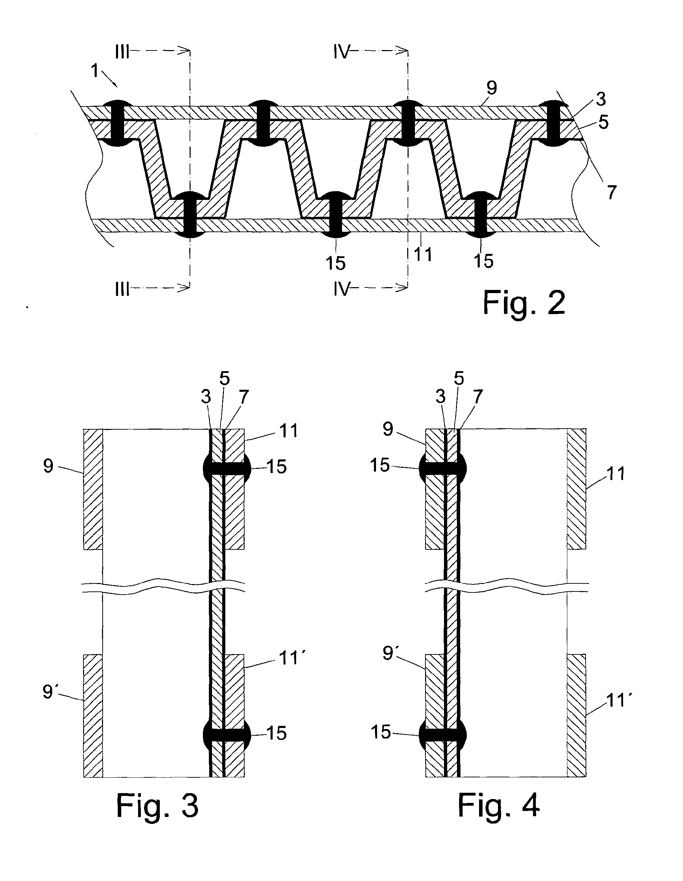

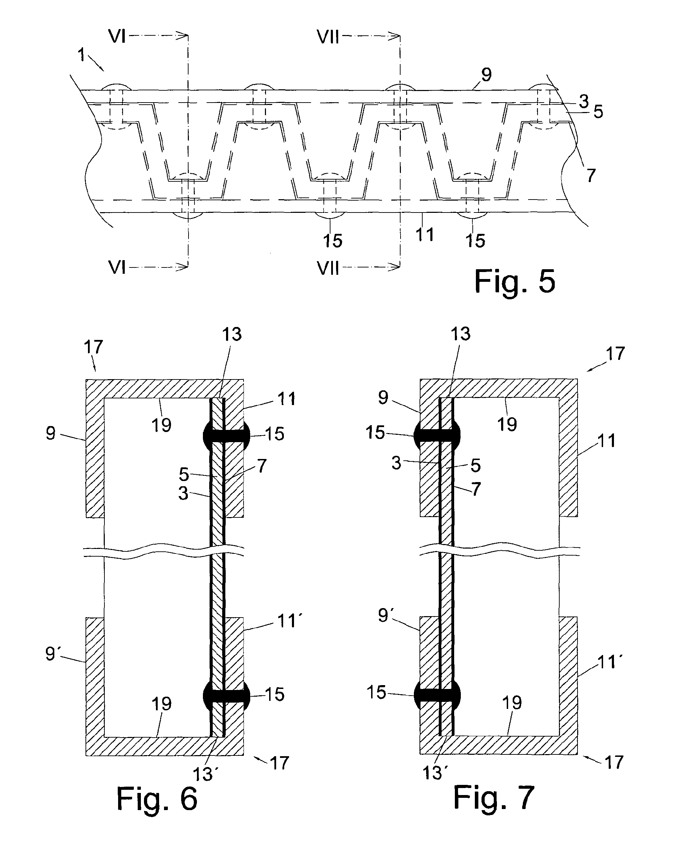

Die Figuren 5 bis 7 entsprechen den Figuren 2 bis 4 mit dem Unterschied, dass anstelle von zwei beidseitig befestigten Flachbändern 9,11 ein U-Profil 17 vorgesehen ist, dessen beiden Schenkel ebenfalls mit 9 bzw. 11 bezeichnet sind und dessen Boden oder Grund mit 19 bezeichnet ist. Die Figur 5 ist dabei eine Aufsicht auf den Leichtbauträger, bei der die verdeckten Bauteile durch gestrichelte Linien dargestellt sind. Im gezeigten Fall ist das U-Profil 17 auf die Stirnfläche 13 aufgesetzt, wo es entweder mit den Nieten 15 an dem Grundkörper 1 befestigt und/oder dort verklebt ist.

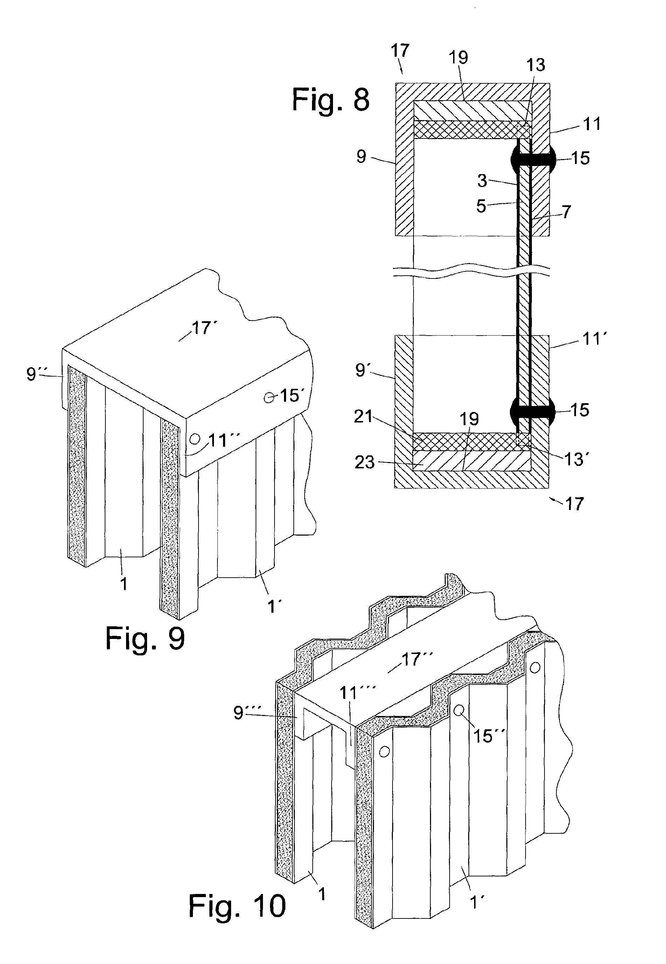

Die Figur 8 entspricht der Figur 6 mit dem Unterschied, dass die Stirnfläche 13 nicht bis zum Grund des U-Profils 17 reicht, sondern in eine elastische Schicht 21, z.B. aus Bitumen, eingebettet ist, die wiederum auf einer Vergussschicht 23 aus einem harten Material, wie z.B. Beton, aufliegt. Es ist auch eine Ausführung sinnvoll, die nur die Gussschicht 23 aus Beton zur Stabilisierung des U-Profils 21 aufweist, wobei dann die Stirnfläche 13 wieder vor der Vergussschicht 23 endet, um seitens der Betonmasse keine Druck oder Zugspitzen in den Grundkörper 1 einzuleiten. Ebenso kann auf die Vergussschicht 23 ganz verzichtet werden, und die Stirnfläche 13 endet innerhalb der verbleibenden elastischen Schicht 21.

In den Figuren 9 und 10 ist je eine Variante mit zwei Grundkörpern 1,1' gezeigt, die beide gleich und analog zum zuvor beschriebenen Grundkörper 1 ausgebildet sind. Die Grundkörper 1 und 1' verlaufen parallel zueinander und sind mittels eines breiteren U-Profils 17', als es in der Ein-Grundkörper-Variante erforderlich ist, verbunden. Die Figur 9 zeigt dabei ein U-Profil 17', welches die außen liegenden Kanten oder Ränder der Grundkörper 1,1' umgreift, so dass die Ränder an den innen liegenden Seiten der U-Schenkel 9,11 zum Anliegen kommen. Die umgekehrte Anordnung ist in der Figur 10 gezeigt. Dort befindet sich ein U-Profil 17"zwischen zwei Grundkörpern 1,1', so dass die innenliegenden Ränder der Grundkörper 1,1` an die außen liegenden Flächen der Schenkel 9,11 des U-Profils 17" anliegen.

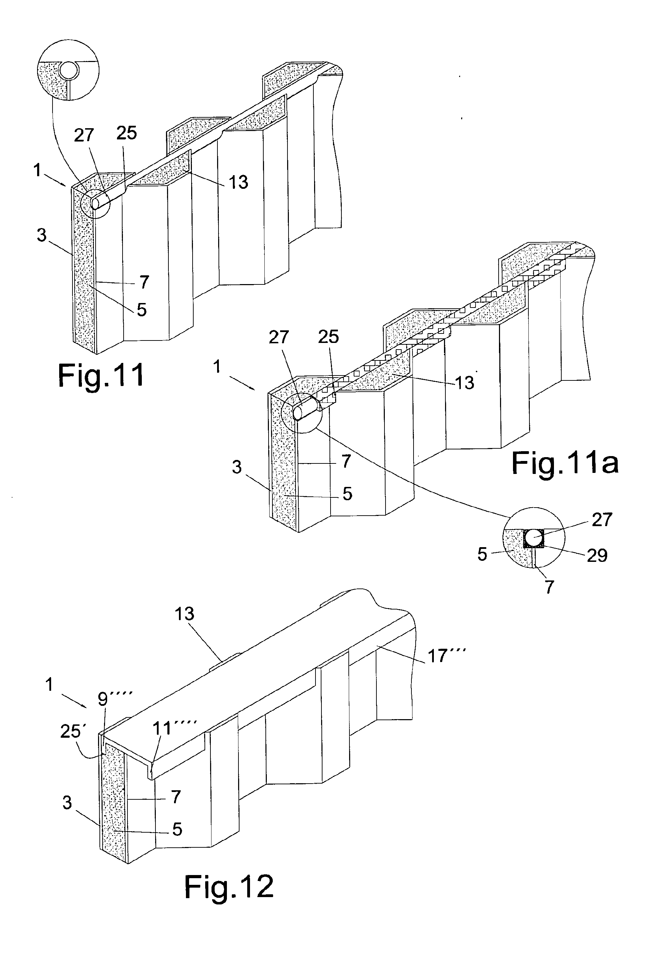

In der Fig.11 ist eine Ausführungsform eines Leichtbauträger mit einem formschlüssigen, in die obere, längsseitige Stirnfläche 13 des Grundkörpers 1 integrierten Rundprofil 27 als Stabilisierungsschiene gezeigt. Das Rundprofil 27 ist dabei ein massiver Stahldraht, der in eine Aussparung 25, die in die Stirnfläche 13 hinein gefräst wurde, eingelegt ist. Das Rundprofil 27 ist in der Aussparung kraftschlüssig mit dem Grundkörper 1 festgelegt, z.B. mittels eines Klebers oder einer Schweißstelle. Insbesondere ist es vorgesehen, das Rundprofil 27 als Armierungseisen in ein Betonbett 29 zu verlegen, welches in die Stirnfläche 13 des Grundkörpers 1 eingebettet ist, wie es in der Figur 11a gezeigt ist. Die untere, nicht gezeigte Seite ist in gleicher Weise stabilisiert. Es ergibt sich eine gute Festigkeit des Leichtbauträgers bei kleinem Gewicht.

In der Fig.12 ist eine Ausführungsform eines Leichtbauträgers mit einem formschlüssigen, in die obere, längsseitige Stirnfläche 13 des Grundkörpers 1 integrierten U-Profil 17"' als Stabilisierungsschiene gezeigt. Dazu sind die Kanten am linken und rechten oberen Rand des Grundkörpers 1 abgetragen, um eine Aussparung 25' für die Schenkel 9,11 des U-Profils 17 zu bilden. Die Aussparung 25' erläuft ebenfalls durch die Hartschaumschicht 5, so dass jeweils eine im Querschnitt rechteckförmige Nut gebildet wird, in welche die beiden Schenkel des U-Profils 17"' formschlüssig anliegen. Formschlüssig bedeutet in diesem Fall, dass die Grundform des Grundkörpers 1 unverändert bleibt und es keine überstehenden Teile der Stabilisierungsschiene gibt.

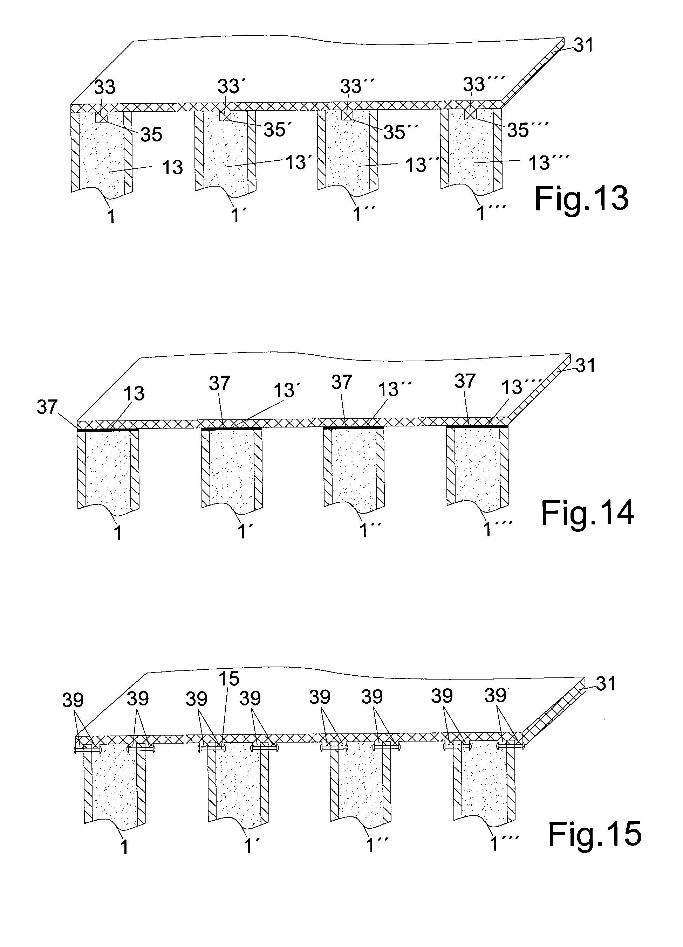

Die Ausführungsform der Figur 13 zeigt einen Leichtbauträger mit vier Grundkörpern 1,1',1",1'" und eine gemeinsame, auf ihrer Unterseite formschlüssig in die längsseitigen Stirnflächen 13,13',13",13"' der zugehörigen Grundkörper 1',1",1",1"' integrierten Stabilisierungsplatte 31. Zur Befestigung mit den Grundkörpern 1,1',1 ",1 "' ist die Stabilisierungsplatte 31 an ihrer Unterseite mit vier parallel verlaufenden Vorsprüngen 33,33',33",33"' versehen, die bei dem Zusammensetzen des Leichtbauträgers in vier gegenüberliegende Nuten 35,35',35",35"' in den Grundkörpern 1,1',1" und 1'" positioniert und dort verklebt werden.

Eine weitere Ausführungsform eines Leichtbauträgers mit vier Grundkörpern 1,1',1 ",1 "' und einer gemeinsamen, formschlüssig an den Stirnflächen 13,13',13",13"' der Grundkörper 1,1',1",1'" verbundener Stabilisierungsplatte 31 ist in der Figur 14 gezeigt. Diese Ausführung ist die technisch anspruchsloseste unter den Mehr-Grundkörper-Varianten, weil die Stabilisierungsplatte 31 eine ebene, zu einem Streifen geschnittene Stahlplatte ist, die an ihrer Unterseite mit den Stirnflächen 13,13',13",13"' der Grundkörper 1,1',1",1'" mittels einer Klebeschicht 37 verklebt ist.

In der Figur 15 ist noch eine Ausführungsform eines Leichtbauträgers mit vier Grundkörpern 1,1',1",1"' gezeigt, die eine Vernietung von einer gemeinsamen Stabilisierungsplatte 31 mit den Grundkörpern 1,1',1 ",1 "' erlaubt. Dazu sind an der Unterseite der Stabilisierungsplatte 31, die auch hier als streifenförmige Platte vorliegt, acht parallel zueinander verlaufende Doppeistege 39 vorgesehen, von denen jeweils zwei ein Paar bilden. Zwischen den Stegen 39 eines Paares ist jeweils einer der Grundkörper 1,1',1",1"' positioniert und mittels Nieten 15 mit der Stabilisierungsplatte 31 verbunden.

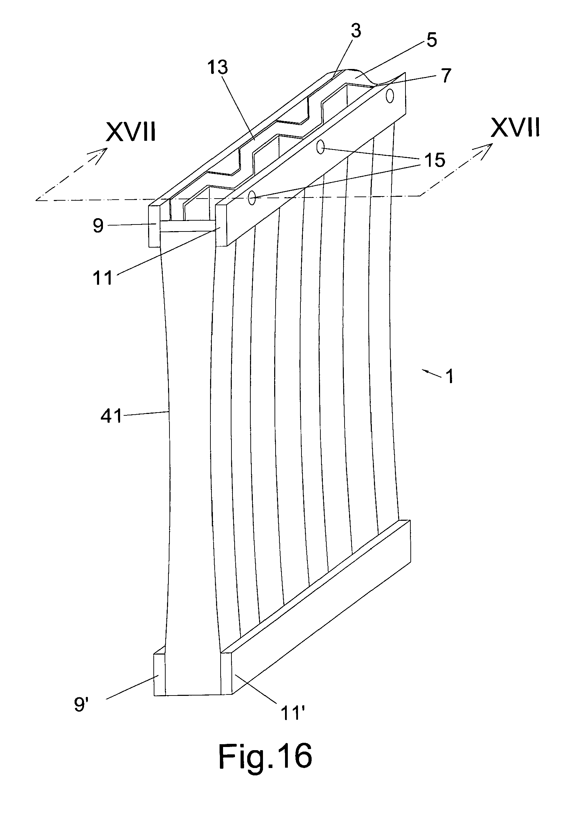

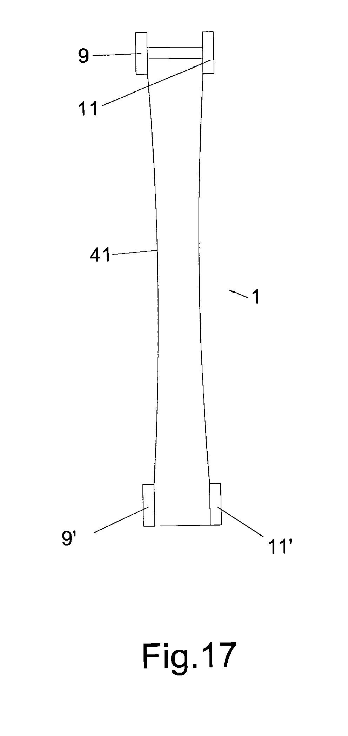

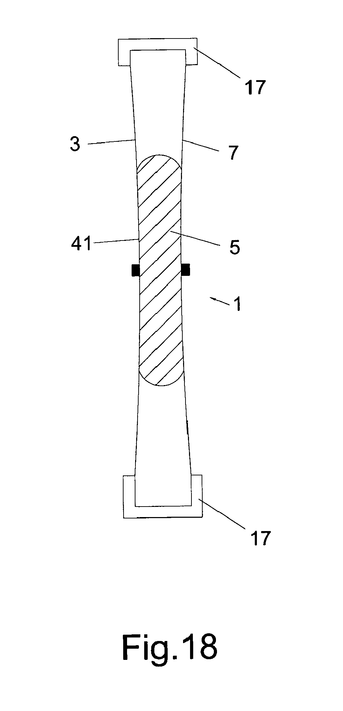

Schließlich ist noch in den Figuren 16 und 17 eine besonders vorteilhafte Variante des Leichtbauträgers gezeigt. In einer zu Illustrationszwecken deutlich übertriebenen Darstellung ist der Grundkörper 1 in seinem mittleren Bereich, insbesondere genau in seiner Mitte, mit einer Einschnürung 41 versehen, die in der Realität wenige Millimeter, z.B. zwischen 1 und 5 mm, ausmacht. Die Einschnürung dient dazu, bei besonders hohen Lasten eine Verbiegung oder ein Verknicken des Leichtbauträgers zu verhindern. Dies geschieht, indem die Einschnürung 41 eine Vorzugsrichtung vorgibt, in welche sich das, die erste Metallschicht 3 bildende Trapezblech durchbiegen wird bzw. ausweichen wird. Die Einschnürung 41 hat eine konkave Form mit der Folge, so dass die Biegekräfte nach innen auf die Hartschaumschicht gerichtet sind. Da von dem weiteren Trapezblech 7 dieselbe Kraft von der anderen Seite, ebenfalls nach innen gerichtet, entgegenwirkt, behält der Grundkörper 1 seine Form bei.

Die Einschnürung 41 wird am besten fertigungstechnisch erzeugt, indem z.B. zunächst der mittlere Bereich mit der Einschnürung 41 ausgeschäumt wird. Dann wird eine Zeit lang abgewartet, bis die Härtung des Schaums einsetzt. Nach Erreichen eines gewissen Härtegrads, der keine Fließfähigkeit des Materials mehr zulässt, werden die beiden Ränder von oben bzw. unten mit einem Druck aufgeschäumt, der so hoch bemessen ist, dass eine geringfügige Aufweitung des Abstands zwischen den beiden Trapezblechen 3,7 erfolgt.

Es wird darauf hingewiesen, dass alle zu einer Variante beschriebenen Ausführungen, wie z.B. das Einbetten in die Stirnfläche 13, Vernietung, Lage des Stabilisierungsmittels, Einschnürung 41 etc. auch auf die anderen Varianten anwendbar sind, soweit es in der Beschreibung nicht ausdrücklich ausgeschlossen wurde. Außerdem kann eine Mischung der Varianten derart erfolgen, dass bei ein und demselben Leichtbauträger an einem Rand eine andere Variante gewählt wird als am anderen Rand. Dabei bleibt es erforderlich, dass immer beide, also der obere und der untere Rand mit einer Stabilisierungsschiene versehen sind.

### Bezugszeichenliste

- 1,1',1",1"': Grundkörper
- 3: erste Metallschicht
- 5: Hartschaumschicht
- 7: weitere Metallschicht
- 9: erstes Flachband
- 11: zweites Flachband
- 13,13',13",13"': Stirnfläche
- 15: Nieten
- 17,17',17": U-Profile
- 17"': integriertes U-Profil
- 19: Boden
- 21: elastische Schicht
- 23: Vergussschicht
- 25: Rundnut
- 27: Rundprofil
- 29: Betonbett
- 31: Stabilisierungsplattenstreifen
- 33,33',33",33"': Vorsprung
- 35,35',35",35"': Nut
- 37: Klebeschicht
- 39: Doppelsteg
- 41: Einschnürung

## Patentansprüche

1. Leichtbauträger mit einem gewellten Grundkörper (1,1'), der eine erste Schicht (3) aus Metall aufweist, auf welche eine zweite Schicht (5) aus Hartschaum aufgebracht ist, auf welche wiederum eine weitere Schicht (7) aus Metall aufgebracht ist, **dadurch gekennzeichnet, dass** der Grundkörper (1,1') die Form eines langgestreckten Rechtecks aufweist, auf oder an dessen oberem und unterem längsseitigen Rand jeweils eine Stabilisierungsschiene (9,11; 17,17',17") verläuft oder dass die Stabilisierungsschienen formschlüssig in die obere, beziehungsweise in die untere längsseitige Stirnfläche der Grundkörpers (1,1') eingearbeitet sind.

2. Leichtbauträger nach Anspruch 1, **dadurch gekennzeichnet, dass** die Stabilisierungsschiene (9,11) ein Flach-, Rund- oder Winkelprofil aus Metall, Kohlefaser oder Kunststoff ist, welches jeweils am unteren und oberen längsseitigen Rand des Grundkörpers (1) auf zumindest einer Seite seitlich befestigt, bzw. stirnseitig integriert ist.

3. Leichtbauträger nach Anspruch 1, **dadurch gekennzeichnet, dass** die Stabilisierungsschiene (17) ein U-Profil (17) aus Metall oder Kunststoff ist, dessen Schenkel (9,11) beidseitig den jeweiligen längsseitigen Rand umgreifen bzw. in eine Aussparung in der stirnseitigen Fläche formschlüssig eingebettet sind.

4. Leichtbauträger nach Anspruch 2 oder 3, **dadurch gekennzeichnet, dass** das Flachprofil bzw. die Schenkel (9,11) des U-Profils (17) an den Scheitelpunkten mehrerer Wellen des Grundkörpers (1,1') vernietet sind.

5. Leichtbauträger nach Anspruch 3 oder 4, **dadurch gekennzeichnet, dass** der Boden (19) mindestens eines, vorzugsweise nur eines der U-Profile (17) zur weiteren Stabilitätsgebung mit einer aushärtenden, druckfesten Masse (23) ausgegossen ist.

6. Leichtbauträger nach Anspruch 5, **dadurch gekennzeichnet, dass** die Masse (23) Kunstharz, Beton oder Beton mit beigemischtem Granitpulver ist.

7. Leichtbauträger nach einem der Ansprüche 1 bis 6, **dadurch gekennzeichnet, dass** der Grundkörper (1,1') ein Trapezfeldträger ist, der trapezförmig gewellt ist.

8. Leichtbauträger nach einem der Ansprüche 1 bis 7, **dadurch gekennzeichnet, dass** zwei parallel verlaufende Grundkörper (1,1') nebeneinander angeordnet sind, deren sich gegenüberliegende innere obere und/oder untere Randflächen mit jeweils einem der Schenkel (9,11) eines zwischen den Grundkörpern (1,1') angeordneten U-Profils (17',17") aus Metall oder Kunststoff verbunden sind. (Fig. 9,10)

9. Leichtbauträger nach einem der Ansprüche 1 bis 8, **dadurch gekennzeichnet, dass** die erste Schicht (3) und die weitere Schicht (7) ein handelsübliches Trapezblech sind, zwischen denen die zweite Schicht (5) verklebt ist.

10. Leichtbauträger nach Anspruch 9, **dadurch gekennzeichnet, dass** das Trapezblech eine Stärke zwischen 0,2 mm und 2 mm, insbesondere zwischen 0,5 mm und 1 mm aufweist.

11. Leichtbauträger nach einem der Ansprüche 5 bis 10, **dadurch gekennzeichnet, dass** auf der aushärtenden Masse (23) eine dauerelastische Masse (21), wie z.B. Bitumen aufgebracht ist, in welche die Stirnfläche (13) des oder der Grundkörper eingedrungen ist bzw. sind. (Fig. 8)

12. Leichtbauträger nach Anspruch 11, **dadurch gekennzeichnet, dass** die dauerelastische Masse (21) 5 mm bis 12 mm dick aufgetragen ist und die Eindringtiefe des oder der Ränder zwischen 2 mm und 7 mm liegt.

13. Leichtbauträger nach einem der Ansprüche 1 bis 12, **dadurch gekennzeichnet, dass** sich mehrere Grundkörper (1,1',1",1'") eine gemeinsame Stabilisierungsschiene (31) teilen. (Fig. 13-15)

14. Leichtbauträger nach einem der Ansprüche 3 bis 13, **dadurch gekennzeichnet, dass** am Boden des U-Profils eine dauerelastische Masse wie z.B. Bitumen eingebracht ist, in welcher die längsseitige Stirnfläche des streifenförmigen Grundkörpers mündet.

15. Leichtbauträger nach einem der Ansprüche 1 bis 14, **dadurch gekennzeichnet, dass** er im Profil, bzw. im Querschnitt gesehen eine Einschnürung (41) aufweist, die insbesondere im mittleren Bereich platziert ist.
